# EUROPEAN PATENT APPLICATION

(11) **EP 2 071 880 A1**
(43) Date of publication of application: **17.06.2009**
(21) Application number: 07023926.4
(22) Date of filing: 11.12.2007
(51) Int. Cl.: H04W 4/00

(54) **Method and data structure for selecting a network operator**

(71) Applicant: Koninklijke KPN N.V., 2516 CK The Hague (NL); Nederlandse Organisatie voor Toegepast- Natuurwetenschappelijk Onderzoek TNO, 2628 VK Delft (NL)
(72) Inventor: Bangma, Menno Remco, 2632 DG Nootdorp (NL); Selgert, Franklin, 2651 BL Berkel en Rodenrijs (NL)
(74) Representative: Wuyts, Koenraad Maria

(57) **Abstract**

The invention relates to a computer-implemented method of selecting a network operator is proposed in a mobile device being configured for consuming a plurality of services. The mobile device comprises a carrier with an electronic data structure containing at least a network operator identifier list and a service identifier list. The network operator identifier list contains at least a first network operator identifier for a first network operator and a second network operator identifier for a second network operator of a network supporting one or more of the services. The service identifier list comprises service identifiers, each service identifier uniquely identifying a service of the plurality of services. The electronic data structure is configured such that each service identifier is associated to one or more network operator identifiers. The electronic data structure may also comprise a network identifier list containing one or more network identifiers, each identifier uniquely identifying a network for providing one or more of said services to said mobile device. The method involves the selection of either the first or second network operator identifier after or by selecting a service identifier (or a parameter or identifier through which said service identifier can be selected) from the service identifier list of the electronic data structure.

## Description

### FIELD OF THE INVENTION

The invention relates to the field of wireless communication with mobile electronic devices configured for connecting to one or more networks. More specifically, the invention relates to the field of selecting a network operator of one or more of said networks.

### BACKGROUND OF THE INVENTION

Roaming is a general term in wireless communication that refers to the extending of a connectivity service to a location that is different from the home network where the connectivity was registered. Roaming is performed by location registration and location update procedures in a manner known as such to the person skilled in the art.

Nowadays, a subscriber who is registered in a home network may roam to networks with which the network operator of the home network has a roaming agreement for interconnecting voice calls. Operators tend to have roaming agreements with as many other network operators as possible. Typically, one of the networks of these network operators is a preferred network.

The 3GPP standard TS 31.102 defines mechanisms for controlling roaming behaviour of a mobile device in a GSM/3G network. This standard describes that the control of roaming behaviour is to a large extent controlled by Elementary Files (EF) on the mobile device or (U)SIM. One of the files is a subscriber-defined PLMN (public land mobile network) list and another one is an operator-defined PLMN list.

The preference for a particular roaming network is typically based on economic considerations. As an example, the default setting in the operator-defined PLMN list may be that roaming should be to a network of an operator with which the operator of the home network has a financially beneficial agreement or to a network of an operator of the same group as the operator of the home network.

The basic service traditionally offered by wireless networks is telephony. Roaming considerations, therefore, focus on interconnecting voice calls. Standardization ensures that the mobile device is capable of connecting to the networks of different network operators for enjoying telephony services at each of these networks. The mobile device selects an operator and the operator decides the network, i.e. the access technology, to be used.

Recently, this situation has become more complicated as a result of the emergence of a variety of new services that mobile devices may consume. Current mobile devices are capable of e.g. voice calls, video calls, sending messages via SMS or e-mail, internet browsing and video streaming.

There exists a need in the art for a more advanced selection of a network operator in such a complicated environment.

### SUMMARY OF THE INVENTION

It is an object of the invention to provide an improved method and electronic data structure for the selection of a network operator.

To that end, a computer-implemented method of selecting a network operator is proposed in a mobile device being configured for consuming a plurality of services. The mobile device comprises a carrier with an electronic data structure containing at least a network operator identifier list and a service identifier list. The network operator identifier list contains at least a first network operator identifier for a first network operator and a second network operator identifier for a second network operator of a network supporting one or more of the services. The service identifier list comprises service identifiers, each service identifier uniquely identifying a service of the plurality of services. The electronic data structure is configured such that each service identifier is associated to one or more network operator identifiers. The electronic data structure may also comprise a network identifier list containing one or more network identifiers, each identifier uniquely identifying a network for providing one or more of said services to said mobile device. The method involves the selection of either the first or second network operator identifier after or by selecting a service identifier (or a parameter or identifier through which said service identifier can be selected) from the service identifier list of the electronic data structure.

Furthermore, an electronic data structure for a mobile device configured for consuming a plurality of services is proposed. The data structure is configured for selecting a network operator and comprises a network operator identifier list, a network identifier list and a service identifier list. The network operator identifier list contains at least a first network operator identifier for a first network operator and a second network operator identifier for a second network operator of a network supporting one or more of the services. The network identifier list contains one or more network identifiers, each identifier uniquely identifying a network for providing one or more of the services to the mobile device. The service identifier list contains service identifiers, wherein each service identifier uniquely identifies a service. The electronic data structure is configured such that each of the service identifiers is associated with one or more network operator identifiers and, optionally, one or more network identifiers.

A computer program, an electronic carrier for such a program and such an electronic data structure, as well as a mobile device containing such a carrier and an application program for such a mobile device are also proposed.

The gist of the proposal is that the selection of a network operator is no longer based on the network, i.e. the access technology for the service, but on the selected service itself. In other words, it is proposed to make the selection on an application service level and no longer on a data connection network level. The network operator is selected on the basis of the selected service followed by the selection of the appropriate network. However, it is also possible that the network is selected on the basis of the selected service and that subsequently, the network operator is selected. A telecommunication service may be defined as a specified set of (user-) information transfer capabilities provided to a group of users by a telecommunication system. Based on the service offered in the (visiting) network, the user may select a network operator.

Furthermore, an increased use of electronic service guides (ESG) has been observed in mobile devices for selecting services. These services may be provided over various networks. It is proposed that the selected network operator is chosen on the basis of the selected service in the ESG.

Although the above-defined method and electronic data structure may be applied within the home network of a mobile device (e.g. for service providers allowed to make use of several networks), it is advantageous to apply the method and electronic data structure in a roaming situation, wherein the home network is not available in accordance with claims 2 and 14.

The embodiment of claim 3 has the advantage that the selection of a service can be detected easily and, consequently, the selection of the network operator for consuming the service is initiated in a simple manner. Various application parameters can be used to detect the selection of a service. An appropriate example is provided by the application characteristics registry provided by the Open Mobile Naming Authority (OMNA) for device management. The OMNA PUSH application ID's may also be used. Another example includes the service numbers of Clause 4.2.8 of 3GPP TS 31.102 V 7.8.0 (2007-3).

The embodiment of claims 4 and 15 provides the advantage of allowing programming a preferred network, i.e. access technology or a preferred network operator, in dependence of the selected service identifier. As an example, the mobile device may be programmed that for browsing services, operator 1 would be used, and for voice calls operator 2.

A single service may require different networks, such as a broadcast network (DVB-H, MediaFlow, DMB) and a cellular radio network (UMTS, GSM). As an example, in a mobile tv service, the content is provided over a DVB-H broadcast network and interactivity aspects may be regulated over a cellular network, such as UMTS. Subscription aspects of the service may be even controlled over a third network, e.g. GSM. In an embodiment of the invention the roaming partner for the mobile tv service can be different from that of other mobile services over the cellular network.

In the embodiments of claims 5, 6, 16 and 17, the aspects of the services are maintained with one network operator for all aspects of the single services.

The embodiment of claim 7 allows a user to manually select a preferred network operator for one or more services.

The embodiments of claims 8-10 provide various convenient manners for providing a mobile device with the electronic data structure from a transmitter. The electronic data structure may either be pushed or retrieved by the mobile device.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIG. 1 shows a schematic illustration of a mobile device in a roaming situation;
FIG. 2 shows a schematic illustration of the mobile device of FIG. 1;
FIGS. 3A and 3B show schematic illustrations of an electronic data structure according to the prior art and according to an embodiment of the invention;
FIG. 4 shows a flow chart illustrating an embodiment of a method performed in the roaming situation of FIG. 1;
FIG. 5 shows a schematic illustration of an announcement channel and delivery channel for distributing an electronic service guide containing an electronic data structure in accordance with an embodiment of the invention; and
FIG. 6 shows an example of an OMA Device Management object structure.

### DETAILED DESCRIPTION OF THE DRAWINGS

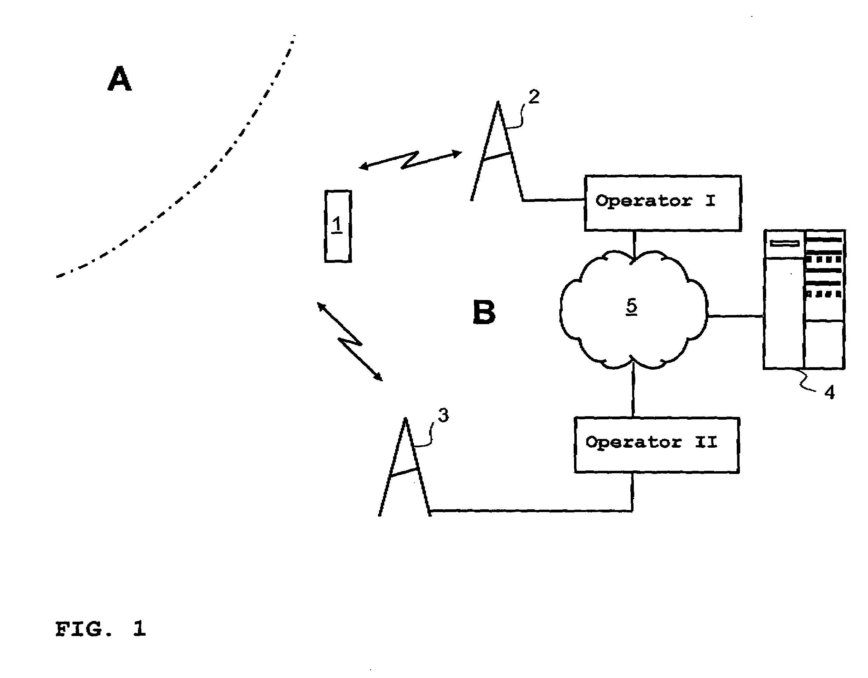

FIG. 1 shows a mobile device 1 having travelled from a first location A (where services could be consumed from the home network of the mobile device) to a second location B (where the home network could no longer provide services) being a roaming location. The mobile device 1 may e.g. comprise a wireless telephone, a personal digital assistant (PDA), or a portable computer.

At the roaming location, at least two network operators I and II are present for providing services to the mobile device 1. It should be appreciated that in practice more than two network operators may be present. The network operators I, II provide services to the mobile device 1 using wireless networks 2, 3, possibly using one or more servers 4 connected via a network 5. The network infrastructure is illustrated in FIG. 1 in a very simple manner. The infrastructure required for providing services to the mobile device 1 is not relevant for the invention and the variety of possibilities for such infrastructures will be apparent to the person skilled in the art.

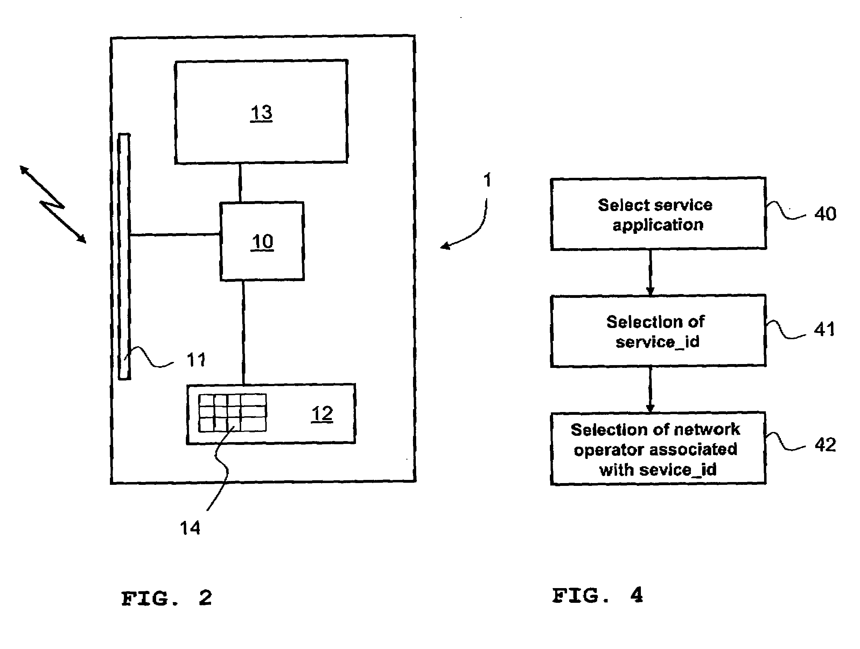

FIG. 2 provides a schematic illustration of a mobile device 1 as a wireless telephone. The mobile device 1 is configured for consuming a plurality of services, including telephony, electronic messaging services, internet browsing, streaming and mobile television.

The mobile device 1 comprises a microprocessor 10, a network interface 11, a memory 12 and a display 13. The microprocessor 10 controls the overall operation of the device 1. Communication with the networks 2, 3 is performed through the network interface 11. Memory 12 indicates one or more memory types, including flash memory and read-only memory and may comprise a (universal) subscriber identity module ((U)SIM). The memory 12 may both contain (application) programs and store one or more electronic data structures 14 in accordance with an embodiment of the invention as well as other data. Display 13 may be an LCD display.

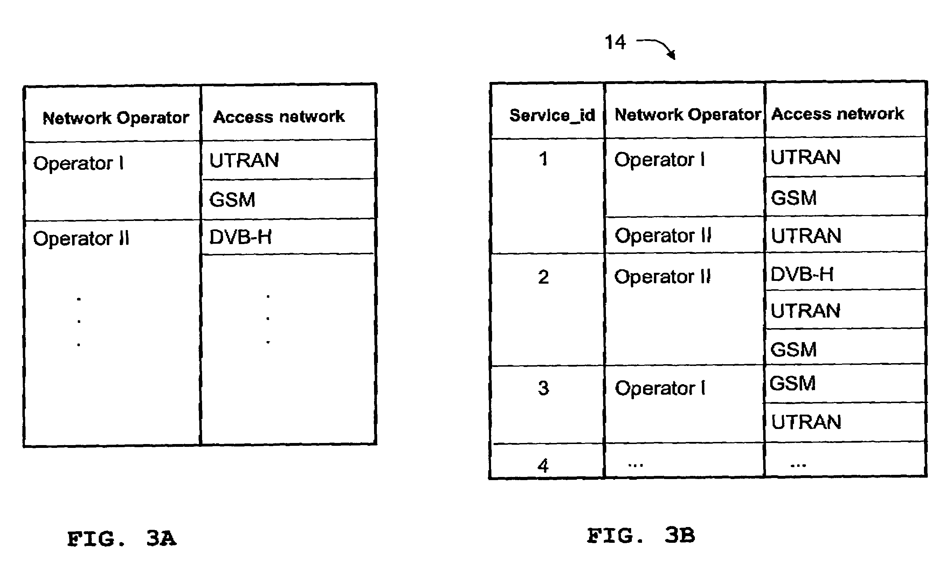

FIGS. 3A and 3B show schematic examples of electronic data structures comprising a preferred roaming list in accordance with the prior art and with an embodiment of the invention, respectively. For clarity purposes, the columns directly identify a particular name of an access network and of a network operator as an identifier. In practice, however, other identifiers may be used. As an example, the network operator (PLMN) may e.g. by identified using a combination of a Mobile Country Code (MCC) followed by a Mobile Network Code (MNC) as coded e.g. in 3GPP TS 24.008. The network may be identified using access technology identifiers as provided in 3GPP TS 31.102.

FIG. 3A shows a part of a contemporary electronic data structure having a first list with network operator identifiers and a second list with network identifiers (indicated by "access network"). The electronic data structure may be an elementary file (EF) on a USIM, either operator-defined or user-defined. The EF may contain further access networks, e.g. MediaFlow, T-DMB, WiFi, WiMAX etc. As mentioned previously, more than two network operators may be listed in the network operator list.

When the mobile device 1 moves from area A to area B (the roaming situation), the mobile device 1 uses the EF to select a network operator. Operator I is programmed as the preferred roaming partner and if the user opens his browser on the mobile device 1, this pre-programmed operator I is selected for providing a UMTS connection for browsing. If the user of the mobile device 1 desires to make a phone call, the UMTS network of operator I is used again for establishing the telephone connection. If the user of the mobile devices starts the mobile television application on his mobile device 1 in the roaming area B, the content is received over the DVB-H network of operator II. However, for interactivity, the UMTS network is to be used as well. This may be problematic, since the preferred network operator for interactive sessions via UMTS is operator I.

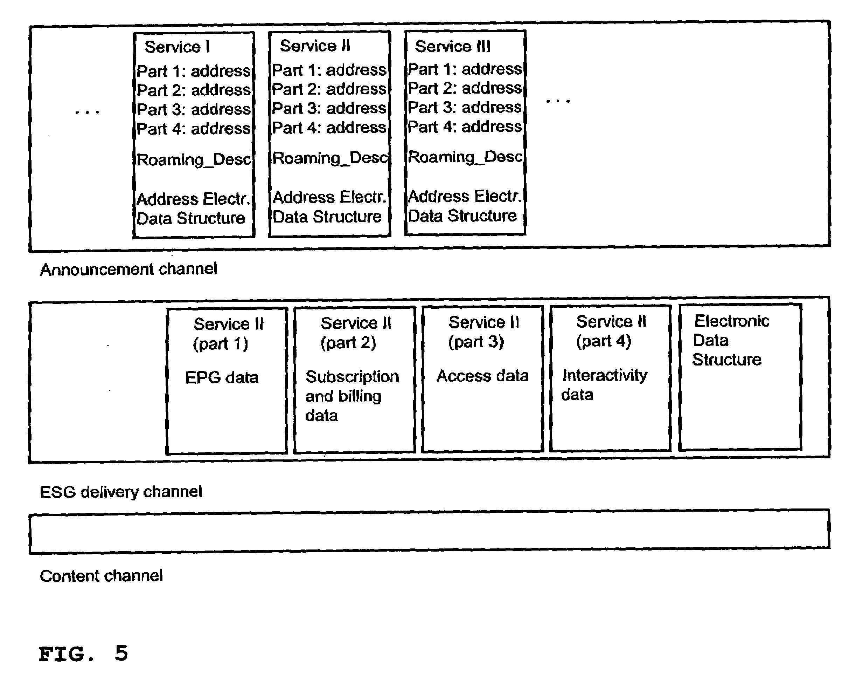

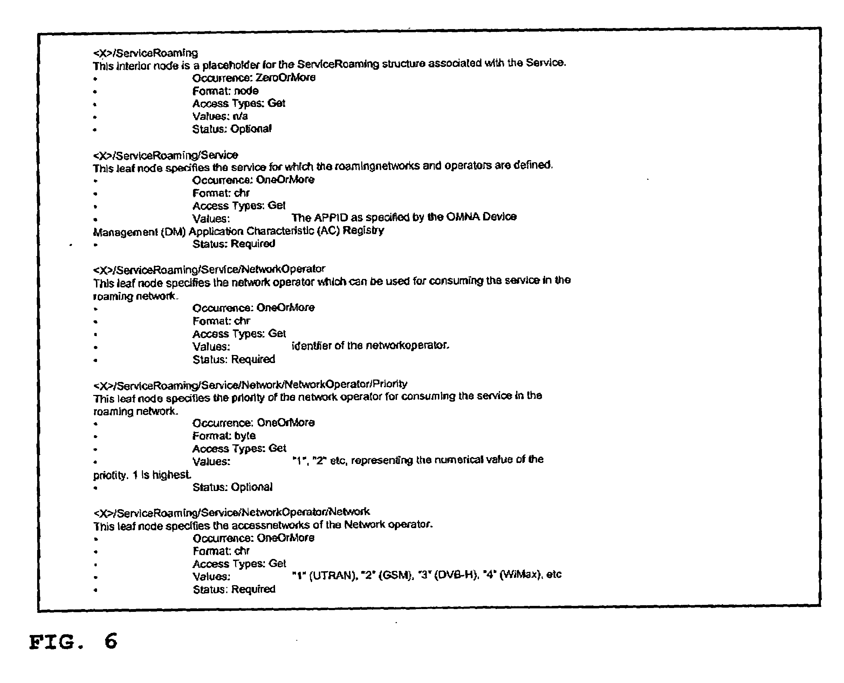

FIG. 3B provides a part of an electronic data structure 14 in accordance with an embodiment of the present invention. The electronic data structure 14 may be contained as an EF on the USIM of the mobile device 1 or on another memory module and can be pre-provisioned by the operator. Other methods of providing the electronic data structure 14 to the mobile device 1 include broadcasting the electronic data structure with an electronic service guide (ESG) as schematically shown in FIG. 5 and using OMA device management techniques as schematically shown in FIG. 6. The user of the mobile device 1 may also configure the electronic data structure 14 himself.

The electronic data structure 14 provides an additional list in comparison with the prior art, viz. a list of service identifiers. Each service identifier uniquely defines a particular service. The electronic data structure 14 is configured such that each of the service identifiers is associated with one or more network operator identifiers and one or more network identifiers. UTRAN is the access network of the UMTS system.

The method of selecting a network operator, e.g. in a roaming situation, using the electronic data structure 14 of FIG. 3B will now be described with reference to FIGS. 4A and 4B.

The user of the mobile device 1 may start an application in dependence of the service he would like to use, e.g. a telephony application for a telephone service, a mobile television application for receiving a mobile television service, a browser for consuming a web browsing service and an e-mail program for an electronic messaging service. The applications for using the respective services run on the microprocessor 10 of the mobile device 1.

The applications are provided with an application code, also referred to as a service enabler. An example of service enablers of OMA for Application Characteristics (AC) is provided in the below table.

| **APPID** | **Description** |
|---|---|
| ap0001 | APPID for the Push to Talk over Cellular (poc) enabler. The PoC AC and MO data is defined in OMA-TS-PoC ControlPlane-V1 0 |
| ap0002 | APPID for the SIMPLE Presence enabler. The Presence AC data is defined in OMA-TS-Presence SIMPLE-V1 0 |
| ap0003 | APPID for the XML Document Management (xdm) enabler. The XDM AC data is defined in OMA-TS-XDM_Core-V1_0 |
| ap0004 | APPID for the Secure User Plane Location (SUPL) enabler. |
| ap0005 | APPID for the Multimedia Messaging Service (MMS) V 1.3 - enabler |
| ap0006 | APPID for the Push to Talk over Cellular (poc) V 2.0 enabler. |
| ap0007 | Reserved for XDM V 2.0 |
| ap0008 | Reserved for SIMPLE IM |
| ap0009 | Reserved for PRESENCE |
| | |
| w2 | AC for the Browsing Enabler |
| w4 | AC for the Multimedia Messaging System Enabler |
| w5 | AC for the Data Synchronization Enabler |
| w7 | AC for the Device Management Enabler |
| wA | AC for the Instant Messaging and Presence Services Enabler |

It should be appreciated that other examples or definitions of codes have been envisaged. Examples include the OMNA push application ID's and the service numbers of Clause 4.2.8 of 3GPP TS 31.102 V 7.8.0 (2007-3). In FIG. 38, a service identifier has been defined for indicating the application. The service identifier may be the application code or service enabler itself.

If an application is started (step 40 in FIG. 4), the service identifier "service_id" is claimed (step 41 in FIG. 4). Service_id=l relates to a browsing service, service_id=2 relates to a mobile television broadcast service and service_id=3 relates to a voice service. Further service identifiers may be defined and used in dependence on the applications present on the mobile device 1.

As an example, if the user of the mobile device 1 selects a browsing application, service_id=1 will be claimed by the application. From the electronic data structure 14, it is clear that the associated preferred network operator is operator I (which is consequently the selected network operator, step 42), since this operator is mentioned first for an application claiming this service identifier. The access technology used will be UMTS or GSM. The second preferred network operator for browsing services is operator II, providing browsing service via OUTRAN.

If the user selects a mobile tv application, service_id=2 will be claimed in the mobile device 1. The mobile tv application may require three different networks: DVB-H for obtaining the content, UMTS for interactivity and GSM for obtaining a subscription for the content. The content is transferred over the DVB-H network. In contrast to the browsing service, interactivity data and subscription information is now transferred over the UMTS or GSM network of operator II as well. Thus, operator II is selected for the mobile tv application, independent of the access technology required. As a consequence, the prior art problem of using a DVB-H network from the same operator as the UMTS network that was selected for all cellular services is resolved

If the user selects a telephony application, service_id=3 is claimed by the application on the mobile device 1. The electronic data structure 14 prescribes that operator I is used and that the GSM access network is used.

FIGS. 5 and 6 schematically illustrate two examples of providing the electronic data structure 14 from a network.

In FIG. 5, the electronic data structure 14 is transmitted over the air in a broadcast signal for distributing an electronic service guide (ESG). In the announcement channel, sometimes also referred to as service discovery channel, the address of the electronic data structure of FIG. 3B is announced or the electronic data structure is included in the announcement channel. The mobile device 1 either retrieves the data structure from the announcement channel or obtains the address where the electronic data structure is stored, tunes to the delivery channel and retrieves a container with the electronic data structure 14. The electronic data structure 14 is subsequently stored in the memory 12 of the mobile device 1.

In FIG. 6, an example is shown of providing the electronic data structure 14 to the mobile device 1 using OMA device management (DM). OMA Device Management Objects comprise a ServiceRoaming interior node, indicated by <X>/ServiceRoaming, that has associated leaf nodes. The services are declared in the ServiceRoaming/Service leaf node. The preferred network operator for this service is declared in the ServiceRoaming/Service/NetworkOperator leaf nodes and ServiceRoaming/Service/NetworkOperator/Priority leaf nodes. The associated networks of the network operators are declared in the ServiceRoaming/Service/NetworkOperator/Network leaf nodes.

As mentioned above, the electronic data structure 14 may also be defined by the user himself, using the display 13 of the mobile device 1. As an example, if the user starts an application on his mobile device 1, a list may be presented on the display 13 displaying choices for selecting a network operator for the services consumed with the application. The processor 10 receives the selection signal for selecting the network operator and subsequently connects to the network of this operator.

The above-defined method and electronic data structure may also be applied within a network of a mobile device (and thus not only in a roaming situation), e.g. for service providers not owning a network but allowed to make use of several networks.

## Claims

1. A computer-implemented method of selecting a network operator in a mobile device being configured for consuming a plurality of services, the mobile device containing an electronic data structure with:
- a network operator identifier list containing at least a first network operator identifier for a first network operator and a second network operator identifier for a second network operator of a network supporting one or more of said services;
- a network identifier list containing one or more network identifiers, each identifier uniquely identifying a network for providing one or more of said services to said mobile device; and
- a service identifier list containing a plurality of service identifiers, each service identifier uniquely identifying a service of said plurality of services in association with said one or more network operator identifiers and, optionally, said one or more network identifiers;
the method comprising the step of selecting either said first or said second network operator identifier by selecting a service identifier from said service identifier list of said electronic data structure.

2. The method according to claim 1, wherein said first and second network operator identifiers are roaming network operator identifiers.

3. The method according to claim 1 or 2, further comprising the steps of:
- initiating an application program for using one or more of said plurality of services on said mobile device; and
- automatically selecting said service identifier in response to said initiation said application program.

4. The method according to one or more of the preceding claims, wherein at least one service identifier is associated with a plurality of network operator identifiers and wherein one of said network operator identifiers is a preferred network operator identifier, the method comprising the steps of:
- selecting said preferred network operator identifier in response to selecting said service identifier; and
- selecting the network identifier associated with said preferred network operator identifier.

5. The method according to one or more of the preceding claims, wherein at least one service identifier is associated with a plurality of network identifiers, the method comprising the step of selecting a single network operator identifier in response to selecting said service identifier for at least two of said plurality of network identifiers.

6. The method according to claim 5, wherein said network identifiers identify a video broadcasting network and a radio access network.

7. The method according to one or more of the preceding claims, wherein said mobile device contains a display, further comprising the steps of:
- displaying an indication of at least said first network operator and said second network operator on said display in response to selecting said service identifier;
- selecting either said first network operator or said network operator by receiving a selection signal in response to a network operator selection made by a user of said mobile device.

8. The method according to one or more of the preceding claims, wherein said electronic data structure is stored on a subscriber identity module of the mobile device.

9. The method according to one or more of the preceding claims, wherein said electronic data structure is received on a broadcast channel for an electronic service guide.

10. The method according to one or more of the preceding claims 1-8, wherein said electronic data structure is received on a unicast device management channel.

11. A computer program comprising software code portions configured for, when executed by a processor, performing the method according to one or more of the preceding claims.

12. An electronic carrier containing the computer program of claim 11.

13. An electronic data structure for a mobile device configured for consuming a plurality of services, said data structure being configured for selecting a network operator, the electronic data structure comprising:
- a network operator identifier list containing at least a first network operator identifier for a first network operator and a second network operator identifier for a second network operator of a network supporting one or more of said services;
- a network identifier list containing one or more network identifiers, each identifier uniquely identifying a network for providing one or more of said services to said mobile device; and
- a service identifier list comprising a plurality of service identifiers, each service identifier uniquely identifying a service of said plurality of services in association with one or more network operator identifiers and, optionally, one or more network identifiers.

14. The electronic data structure according to claim 13, wherein said first and second network operator identifiers are roaming network operator identifiers.

15. The electronic data structure according to claims 13 or 14, wherein at least one service identifier is associated with a plurality of network operator identifiers and wherein one of said network operator identifiers is indicated as a preferred network operator identifier.

16. The electronic data structure according to one or more of the claims 13-15, wherein at least one service identifier is associated with a plurality of network identifiers and
wherein each of said network identifiers is associated with the same network operator identifier.

17. The electronic data structure according to claim 16, wherein said network identifiers identify a video broadcasting network and a radio access network.

18. An electronic medium, such as a subscriber identity module (SIM), comprising the electronic data structure according to one or more of the claims 13-17.

19. A mobile device comprising the electronic medium of claim 18.

20. An application program for a mobile device configured for consuming a plurality of services, said mobile device comprising a data structure for selecting a network operator, the electronic data structure comprising:
- a network operator identifier list containing at least a first network operator identifier for a first network operator and a second network operator identifier for a second network operator of a network supporting one or more of said services;
- a network identifier list containing one or more network identifiers, each identifier uniquely identifying a network for providing one or more of said services to said mobile device; and
- a service identifier list comprising a plurality of service identifiers, each service identifier uniquely identifying a service of said plurality of services in association with one or more network operator identifiers and, optionally, one or more network identifiers,
wherein the application program comprises a software code portion for calling said service identifiers in response to initiating said application program.
